# EUROPEAN PATENT SPECIFICATION

(11) **EP 2 799 489 B1**
(45) Date of publication and mention of the grant of the patent: **05.06.2019**
(21) Application number: 12863729.5
(22) Date of filing: 03.12.2012
(51) Int. Cl.: C08L 23/26, C08L 23/02, C08F 255/02, C08L 23/08, C08L 23/10, C08L 23/12, C08L 51/06, C08K 7/02

(54) **RESIN COMPOSITION**
HARZZUSAMMENSETZUNG
COMPOSITION DE RÉSINE

(30) Priority: 28.12.2011 JP 2011289947
(43) Date of publication of application: 05.11.2014
(73) Proprietor: TOYOBO CO., LTD., Osaka-shi, Osaka 5308230 (JP)
(72) Inventor: SAKATA, Hideyuki, Takasago-shi Hyogo 676-0082 (JP); KASHIHARA, Kenji, Takasago-shi Hyogo 676-0082 (JP); YOKOMICHI, Takuya, Takasago-shi Hyogo 676-0082 (JP)
(74) Representative: Müller-Boré & Partner Patentanwälte PartG mbB
(86) International application number: PCT/JP2012/081291
(87) International publication number: WO 2013/099530

(56) References cited:
- EP-A1- 2 455 421
- FR-A1- 2 602 514
- JP-A- H 032 241
- JP-A- 2006 077 063
- JP-A- 2011 021 087
- JP-A- 2011 231 237
- US-A1- 2004 214 925
- US-A1- 2007 078 050

## Description

The present invention relates to a resin composition.

Conventionally, polyolefin resins, such as polypropylene, have excellent shock resistance, thermal deformation resistance, molding processability, etc., and are thus used for various applications, such as resin materials for vehicle exteriors and interiors, vehicle parts, home appliance parts, molded articles for home appliance exteriors, industrial parts, convenience goods, etc.

For example, PTL 1 proposes a resin composition comprising a polyolefin resin and plant fiber, as well as a polyolefin modified with a carboxyl group- or carboxyl derivative group-containing unsaturated compound. However, the resin composition is not considered to have sufficient bending strength, tensile strength, bending elastic modulus, etc., for use in molded articles for vehicle interiors, molded articles for home appliance exteriors, etc.; accordingly, there is room for improvement in this resin composition.

Moreover, PTL 2 and PTL 3 propose resin compositions comprising a polyolefin resin and fiber, as well as an acid-modified or epoxy-modified olefin-based compound as a compatibilizer. However, PTL 2 and PTL 3 only disclose a case in which an acid-modified olefin-based compound is used. There is room for improvement in these resin compositions in terms of bending strength, tensile strength, and bending elastic modulus.

For these reasons, there is a demand for the development of resin compositions comprising a polyolefin resin and fiber, and having sufficient bending strength, tensile strength, and bending elastic modulus suitable for use in molded articles for vehicle interiors, molded articles for home appliance exteriors, etc.

PTL 1: JPH08-283475A
PTL 2: JP2011-231237A
PTL 3: JP2007-56176A

An object of the present invention is to provide a resin composition having excellent bending strength, tensile strength, and bending elastic modulus suitable for use in molded articles for vehicle interiors, molded articles for home appliance exteriors, etc.

As a result of extensive research, the present inventors found that the above object can be achieved by using specific resins and a specific fiber, and have completed the present invention.

More specifically, the present invention relates to the following resin composition.
1. A resin composition comprising the following (1) to (3) :
   (1) a polyolefin;
   (2) an epoxy-modified polyolefin;
   (3) cellulose fiber; and
   (4) a basic compound,
   wherein the epoxy-modified polyolefin (2) has a melt viscosity at 230°C of 200 to 7,000 mPa·s, and
   wherein the basic compound is at least one member selected from the group consisting of high-boiling tertiary amines, quaternary amine salts, polyallylamines and tertiary amine-modified polyolefins.
2. The resin composition according to item 1, wherein the epoxy-modified polyolefin (2) is at least one member selected from the group consisting of a glycidyl methacrylate-modified ethylene-propylene copolymer and glycidyl methacrylate-modified polypropylene.
3. The resin composition according to item 1 or 2, wherein the polyolefin (1) is at least one member selected from the group consisting of polypropylene and a propylene-α-olefin copolymer.
4. The resin composition according to any one of items 1 to 3, wherein the epoxy-modified polyolefin (2) is contained in an amount of 1 to 5 mass% based on the total mass of the resin composition.

The resin composition of the present invention is described in detail below. The present invention also includes an invention of a method for producing the resin composition, an invention of use of the resin composition, and an invention of a method for using the resin composition.

### Resin Composition of the Present Invention

The resin composition of the present invention comprises the following (1) to (3):
(1) a polyolefin;
(2) an epoxy-modified polyolefin;
(3) cellulose fiber, and
(4) a basic compound.
The resin composition of the present invention having the above features uses a polyolefin and an epoxy-modified polyolefin as the specific resin components, and uses cellulose fiber as the specific fiber. This enables the production of a resin composition in which highly polar cellulose fibers are uniformly dispersed in a polyolefin. Accordingly, the resin composition has excellent bending strength, tensile strength, and bending elastic modulus. Such a resin composition of the present invention is suitable for use in molded articles for vehicle interiors, molded articles for home appliance exteriors, etc.

Each component of the resin composition of the present invention is described below. Further note that a resin composition consisting of (1) a polyolefin, (2) an epoxy-modified polyolefin, (3) cellulose fiber, and (4) a basic compound, described later, is preferred embodiment of the resin composition of the present invention.

### (1) Polyolefin

The resin composition of the present invention comprises a polyolefin. Examples of polyolefins include homopolymers, such as polyethylene and polypropylene, as well as copolymers of olefins (e.g., ethylene and propylene) and other monomers. Among these, at least one member selected from the group consisting of polypropylene and a propylene-α-olefin copolymer is preferred, and polypropylene is more preferred.

The propylene-α-olefin copolymer is obtained by copolymerizing propylene, which is a main component, and an α-olefin. Examples of α-olefins include ethylene, 1-butene, 1-heptene, 1-octene, 4-methyl-1-pentene, and the like, which can be used singly or in combination of two or more. Among these α-olefins, at least one member selected from the group consisting of ethylene and 1-butene is preferred. Although the ratio of the propylene component and the α-olefin component in the propylene-α-olefin copolymer is not limited, the propylene component is preferably 50 mol% or more, and more preferably 70 mol% or more.

These polyolefins can be used singly or in combination of two or more.

Although the polyolefin content is not particularly limited, it is preferably 60 to 89 mass%, more preferably 62 to 87 mass%, and even more preferably 63 to 70 mass%, based on the total mass of the resin composition of the present invention, in terms of tensile strength, bending strength, bending elastic modulus, shock resistance, etc.

### (2) Epoxy-Modified Polyolefin

The resin composition of the present invention comprises an epoxy-modified polyolefin. The incorporation of the epoxy-modified polyolefin enables the production of a resin composition in which highly polar cellulose fibers are uniformly dispersed in a low-polar polyolefin.

Examples of epoxy-modified polyolefins include copolymers obtained by graft-copolymerizing homopolymers or copolymers of α-olefins and monomers having a glycidyl group or an epoxy group by the action of an organic peroxide.

Examples of α-olefins include ethylene, propylene, 1-butene, 1-heptene, 1-octene, 4-methyl-1-pentene, and the like, which can be used singly or in combination of two or more.

Examples of monomers having a glycidyl group or an epoxy group include glycidyl (meth)acrylate, 4-hydroxybutyl acrylate glycidyl ether, allyl glycidyl ether, and the like. In the present specification, (meth)acrylate means acrylate or methacrylate. The same applies to other similar parts.

An organic peroxide can be used as a polymerization initiator. Examples of organic peroxides include peroxides, such as di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-*tert*-butyl peroxide, and lauroyl peroxide; azonitriles, such as azobisisobutyronitrile and azobisisopropionitrile; and the like.

Specific examples of epoxy-modified polyolefins include epoxy-modified polyethylenes, such as glycidyl (meth)acrylate-modified polyethylene, glycidyl (meth)acrylate-modified ethylene-vinyl acetate copolymer, glycidyl (meth)acrylate-modified ethylene-acrylic acid methyl ester copolymer, glycidyl (meth)acrylate-modified ethylene-acrylic acid ethyl ester copolymer, glycidyl (meth)acrylate-modified ethylene-acrylic acid butyl ester copolymer, glycidyl (meth)acrylate-modified ethylene-acrylic acid-acrylic acid ester copolymer, glycidyl (meth)acrylate-modified ethylene-methacrylic acid ester copolymer, glycidyl (meth)acrylate-modified ethylene-methacrylic acid-methacrylic acid ester copolymer, and glycidyl (meth)acrylate-modified ethylene-α-olefin copolymer; epoxy-modified polypropylenes, such as glycidyl (meth)acrylate-modified polypropylene, glycidyl (meth)acrylate-modified ethylene-propylene copolymer, and glycidyl (meth)acrylate-modified ethylene-propylene-diene copolymer; and the like. Among these, at least one member selected from the group consisting of glycidyl methacrylate-modified ethylene-propylene copolymers and glycidyl methacrylate-modified polypropylenes is preferred, and a glycidyl methacrylate-modified polypropylene (GMA-modified polypropylene) is more preferred.

The method for producing the epoxy-modified polyolefin is not particularly limited. For example, a radical grafting reaction can be used. Specifically, a radical species is generated for a polymer used as a main chain, and a monomer is graft-polymerized using the radical species as a polymerization starting point.

The epoxy equivalent of the epoxy-modified polyolefin is preferably 900 to 8,000 g/eq., more preferably 1,500 to 3,000 g/eq., and even more preferably 1,800 to 2,200 g/eq., in terms of efficiently imparting dispersibility of cellulose fibers.

The melt viscosity at 230°C of the epoxy-modified polyolefin is 200 to 7,000 mPa·s, and more preferably 200 to 1,000 mPa·s. When the melt viscosity falls within the above range, the epoxy-modified polyolefin has excellent shear strength and is easily dispersed in the cellulose fiber interface, thus resulting in a significant effect of improving interface bonding. The melt viscosity can be measured, for example, by a MODEL ET-45P rotary viscometer (produced by Toyo Engineering Works, Ltd.).

The following specifically describes the details of a method for producing a glycidyl methacrylate-modified polyolefin as an example of the method for producing the epoxy-modified polyolefin.

In step 1, a polyolefin, toluene, and glycidyl methacrylate are placed and mixed in a reactor, and the mixture is heated to about 120 to 130°C. In step 2, an organic peroxide (preferably di-t-butyl peroxide) is further added to the reactor as a polymerization initiator, and the mixture is heated to about 130 to 140°C, thereby reacting the polyolefin and the glycidyl methacrylate. In step 3, the product obtained by the above reaction is cooled, followed by blowing (reprecipitation). Further, a solvent (e.g., methyl ethyl ketone or acetone) that can dissolve polyglycidyl methacrylate is added, and the mixture is stirred to form a slurry of the product. The unreacted polyglycidyl methacrylate can be washed in this step. In step 4, the slurry of the product is centrifuged, the product is formed into a slurry again, and this slurry is dried under reduced pressure. Thereby, a glycidyl methacrylate-modified polyolefin is obtained.

The epoxy-modified polyolefins can be used singly or in combination of two or more.

A particularly preferred combination of a polyolefin and an epoxy-modified polyolefin is, for example, a combination of polypropylene and glycidyl methacrylate-modified polypropylene.

The epoxy-modified polyolefin content is not particularly limited, but is preferably 1 to 5 mass%, and more preferably 1 to 3 mass%, based on the total mass of the resin composition of the present invention. When the epoxy-modified polyolefin content falls within the above range, the cellulose fibers are well dispersed in the polyolefin, which results in particularly excellent tensile strength, bending strength, and bending elastic modulus.

### (3) Cellulose Fiber

The resin composition of the present invention comprises cellulose fiber. The cellulose fiber improves the bending strength, tensile strength, bending elastic modulus, and other dynamic physical properties of the resin composition.

Examples of cellulose fiber include natural cellulose fiber, such as cotton, ramie, and flax; regenerated cellulose fiber, such as viscose-process rayon and cuprammonium rayon; and the like.

The average fiber length of the cellulose fibers is preferably 18 to 2,200 µm, although it is not limited thereto.

The average fiber diameter of the cellulose fibers is preferably 15 to 35 µm, although it is not limited thereto.

The average aspect ratio (fiber length/fiber diameter) of the cellulose fibers is preferably 1.2 to 60, although it is not limited thereto.

Cellulose fibers having an average fiber length of 120 to 2,200 µm and an average aspect ratio of 2 to 45 are more preferred in terms of bending strength, tensile strength, bending elastic modulus, etc.

The fiber length and fiber diameter of the cellulose fibers can be measured by, for example, a scanning electron microscope (SEM), an optical microscope, or the like.

The cellulose fibers can be used singly or in combination of two or more.

The cellulose fiber content is not particularly limited, but is preferably 5 to 50 mass%, more preferably 10 to 35 mass%, and even more preferably 27 to 33 mass%, based on the total mass of the resin composition of the present invention, in terms of tensile strength, bending strength, bending elastic modulus, shock resistance, etc.

### (4) Other Components

The resin composition of the present invention comprises a basic compound, in addition to a polyolefin, an epoxy-modified polyolefin, and cellulose fiber.

According to the present invention, the basic compound is selected from the group consisting of high-boiling tertiary amines; quaternary amine salts; polyallylamines; and tertiary amine-modified polyolefins. The basic compound can prevent odor derived from low-boiling amine components, and increase tensile strength, bending strength, and bending elastic modulus, while maintaining the dispersibility of the cellulose fibers in the resin composition.

Examples of high-boiling tertiary amines include trioctylamine, tridodecylamine, tristearylamine, triethanolamine, diazabicycloundecene (1,8-diazabicyclo[5.4.0]undec-7-ene), and the like.

Examples of quaternary amine salts include tetramethyl ammonium chloride, dodecyl trimethyl ammonium chloride, lauryl trimethyl ammonium chloride, didecyl dimethyl ammonium chloride, dioctyl dimethyl ammonium bromide, lauryl dimethyl benzyl ammonium chloride, and the like.

Examples of tertiary amine-modified polyolefins include those obtained by a reaction of adding a compound having a tertiary amine structure and a reactive functional group to homopolymers or copolymers of α-olefins. For example, resins obtained by modifying polyolefins with dimethylaminoethyl (meth) acrylate, dimethylaminopropylacrylamide, etc., can be used.

Examples of α-olefin homopolymers or copolymers are homopolymers or copolymers of the α-olefins mentioned in "(2) Epoxy-Modified Polyolefin" above. The α-olefins mentioned in "(2) Epoxy-Modified Polyolefin" above are ethylene, propylene, 1-butene, 1-heptene, 1-octene, 4-methyl-1-pentene, etc., which can be used singly of in combination of two or more.

Since the use of a small amount of basic compound may result in the above effects, a masterbatch may be prepared beforehand by melting and kneading the basic compound with the polyolefin (1) mentioned above.

The basic compounds can be used singly or in combination of two or more.

When a basic compound is used, the content thereof is not particularly limited, but is preferably 0.05 to 2 mass% based on the total mass of the resin composition of the present invention.

The resin composition of the present invention can suitably contain additives, elastomers, etc., if necessary, within a range that does not affect the effects of the present invention. Examples of such additives include antioxidants, weathering stabilizers, antistatic agents, lubricants, nucleating agents, flame retardants, pigments, dyes, and other various additives.

### Method for Producing the Resin Composition of the Present Invention

The method for producing the resin composition of the present invention is not particularly limited. For example, a polyolefin, an epoxy-modified polyolefin, and cellulose fiber are melted and kneaded by a twin-screw extruder to form a composite. In this case, the starting materials are each supplied to separate coil feeders. The kneading temperature is preferably about 200°C, which is higher than the melting point of the polyolefin. Moreover, as a collection method, it is preferable to cool the strand-like molten resin discharged from the twin-screw extruder, and then cut it into pellets using a pelletizer. The obtained pellets are used to prepare test samples by an injection molding machine.

The resin composition of the present invention is suitable for use in molded articles for vehicle interiors, molded articles for home appliance exteriors, etc.

The resin composition of the present invention uses a polyolefin and an epoxy-modified polyolefin as the specific resin components, and uses cellulose fiber as the specific fiber. This enables the production of a resin composition in which highly polar cellulose fibers are uniformly dispersed in a polyolefin. Accordingly, the resin composition has excellent bending strength, tensile strength, and bending elastic modulus.

The present invention is described in more detail below with reference to Examples. However, the present invention is not limited thereto.

### Production Example 1

Polypropylene (100 parts by mass; melt viscosity at 230°C = 400 mPa·s), 70 parts by mass of toluene, and 10 parts by mass of glycidyl methacrylate (GMA) were added to a 1 L autoclave, and the mixture was heated to 130°C to thereby uniformly dissolve the polypropylene. Di-*tert*-butyl peroxide (4 parts by mass) was added to the polypropylene solution heated to 130°C, and the mixture was stirred at 140°C for 3 hours. The obtained reaction solution was cooled, and then poured into a container containing a large amount of methyl ethyl ketone to precipitate resin. Subsequently, the resin-containing solution was centrifuged to effect solid-liquid separation of the solution into modified polypropylene graft-polymerized with glycidyl methacrylate, and polyglycidyl methacrylate, followed by purification. Then, the purified product was dried at 70°C for 5 hours under reduced pressure, thereby obtaining glycidyl methacrylate-modified polypropylene (GMA-modified polypropylene (PP-1, epoxy equivalent = 1,800 g/eq., melt viscosity at 230°C = 280 mPa·s)).

### Production Example 2

Polypropylene (100 parts by mass; melt viscosity at 230°C = 160,000 mPa·s or more, melt flow rate at 230°C = 9 g/10 min), 190 parts by mass of toluene, and 30 parts by mass of glycidyl methacrylate were added to a 1 L autoclave, and the mixture was heated to 130°C to thereby uniformly dissolve the polypropylene. The production process after the polypropylene was uniformly dissolved was the same as the production process after the polypropylene was uniformly dissolved in Production Example 1. As a result, glycidyl methacrylate-modified polypropylene (GMA-modified polypropylene (PP-2, epoxy equivalent = 2,200 g/eq., melt viscosity at 230°C = 6,900 mPa·s)) was obtained.

### Production Example 3

Polypropylene (100 parts by mass; melt viscosity at 230°C = 400 mPa·s), 70 parts by mass of toluene, and 20 parts by mass of dimethylaminopropylacrylamide were added to a 1 L autoclave, and the mixture was heated to 130°C to thereby uniformly dissolve the polypropylene. The production process after the polypropylene was uniformly dissolved was the same as the production process after the polypropylene was uniformly dissolved in Production Example 1. As a result, tertiary amine-modified polypropylene (PP-3, amine value = 900 g/eq., melt viscosity at 230°C = 840 mPa·s) was obtained.

### Production Example 4

To a same-direction-rotating, complete engagement-type twin-screw extruder with a screw diameter of 15 mm (KZW15TW-45/60MG-NH, produced by Technovel Corporation), polypropylene ("J105SP," produced by Prime Polymer Co., Ltd.) was supplied at a rate of 21.3 g/min, and tridodecylamine was supplied at a rate of 4.6 ml/min. The resulting mixture was melted and kneaded at a cylinder temperature of about 200°C, and discharged from a discharge outlet. The discharged strand-like molten resin was cooled by passing through a cooling bath, and the cooled product was cut using a pelletizer while winding, followed by drying under reduced pressure. Thus, a pellet-like tertiary amine-polypropylene masterbatch (a mixture of tridodecylamine and polypropylene, PP-4, tertiary amine content = 15 wt%, and amine value = 3,480 g/eq.) was obtained.

### Production Example 5

A tertiary amine-polypropylene masterbatch (a mixture of triethanolamine and polypropylene, PP-5, tertiary amine content = 6 wt%, and amine value = 2,500 g/eq.) was obtained in the same manner as in Production Example 4, except that triethanolamine was supplied at a rate of 1.1 ml/min, in place of tridodecylamine.

### Production Example 6

A tertiary amine-polypropylene masterbatch (a mixture of diazabicycloundecene and polypropylene, PP-6, tertiary amine content = 6 wt%, and amine value = 2,500 g/eq.) was obtained in the same manner as in Production Example 4, except that diazabicycloundecene was supplied at a rate of 1.3 ml/min, in place of tridodecylamine.

### Examples 7 to 10, Reference Examples 1 to 6, 11 and 12, and Comparative Examples 1 to 5

The components shown in Table 1 below were each supplied in a predetermined amount (part by mass) to a same-direction-rotating, complete engagement-type twin-screw extruder with a screw diameter of 15 mm (KZW15TW-45/60MG-NH, produced by Technovel Corporation). Each mixture was melted and kneaded at a cylinder temperature of 200°C, and discharged from a discharge outlet. The discharged strand-like molten resin was cooled by passing through a cooling bath, and the cooled product was cut using a pelletizer while winding. Thus, pellet-like samples were individually obtained. After the samples were dried under reduced pressure, test samples for evaluation were prepared using an injection molding machine (Plastar Si-900III D150, produced by Toyo Machinery & Metal Co., Ltd.) at a cylinder temperature of 180°C at a pressure of 100 MPa.

The polypropylene used was "J105SP" (produced by Prime Polymer Co., Ltd.; melt flow rate at 230°C = 9 g/10 min). The cellulose fiber used was "Arbocel BWW40" (average fiber length = 200 µm, average fiber diameter = 20 µm) (produced by J. Rettenmaier) . The GMA-modified polypropylenes PP-1 (epoxy equivalent = 1,800 g/eq., melt viscosity at 230°C = 280 mPa·s) and PP-2 (epoxy equivalent = 2,200 g/eq., melt viscosity at 230°C = 6,900 mPa·s) used were those obtained, respectively, in Production Examples 1 and 2 above. The MAH-modified polypropylene (maleic anhydride-modified polypropylene) used was "Yumex 1010" (produced by SanyoKasei Co., Ltd.). The tertiary amine-modified polypropylene (PP-3, amine value = 900 g/eq., melt viscosity at 230°C = 840 mPa·s) was one obtained in Production Example 3 above. The tertiary amine polypropylene masterbatches (PP-4, PP-5, and PP-6) used were those obtained, respectively, in Production Examples 4 to 6 above.

### Test Example 1 (Dispersibility Test)

The pellet-like samples obtained in Examples 7 to 10, Reference Example 1 to 6, 11 and 12, and Comparative Examples 1 to 5 were each pressed using a hot-press (SA-302, produced by Tester Sangyo Co. Ltd.) at a pressure of 20 MPa at 200°C for 2 minutes to form thin films. Thereafter, the presence of aggregates was visually confirmed to evaluate the dispersibility. Films having excellent dispersibility without aggregates were evaluated as "A," and films having aggregates were evaluated as "B."

### Test Example 2 (Tensile Strength Test)

The test samples obtained in Examples 7 to 10, Reference Example 1 to 6, 11 and 12, and Comparative Examples 1 to 5 were subjected to a tensile strength test based on JIS K 7162 (ISO 527-2) using a universal testing machine (Model 1175, produced by Instron Corporation).

### Test Example 3 (Bending Strength Test)

The test samples obtained in Examples 7 to 10, Reference Example 1, 4, 11 and 12, and Comparative Examples 1 and 3 to 5 were subjected to a bending strength test based on JIS K 7171 (ISO 178) using a universal testing machine (Model 1175, produced by Instron Corporation).

### Test Example 4 (Bending Elastic Modulus Test)

The test samples obtained in Examples 7 to 10, Reference Example 1, 4, 11 and 12, and Comparative Examples 1 and 3 to 5 were measured for bending elastic modulus based on JIS K 7171 (ISO 178) using a universal testing machine (Model 1175, produced by Instron Corporation).

**Table 1**

| | Polypropylene | Cellulose fiber | GMA-modified polypropylene | | MAH-modified Polypropylene | Tertiary amine-modified polypropylene | Tertiary amine-polypropylene masterbatch | | | Dispersibility | Tensile strength (MPa) | Bending strength (MPa) | Bending elastic modulus (GPa) |
|---|---|---|---|---|---|---|---|---|---|---|---|---|---|
| | | | PP-1 | PP-2 | | PP-3 | PP-4 | PP-5 | PP-6 | | | | |
| Ex. 1^{#} | 67 | 30 | 3 | | | | | | | A | 37.6 | 62.7 | 2.71 |
| Ex. 2^{#} | 69 | 30 | 1 | | | | | | | A | 37.1 | - | - |
| Ex. 3^{#} | 68 | 30 | 2 | | | | | | | A | 37.4 | - | - |
| Ex. 4^{#} | 65 | 30 | 5 | | | | | | | A | 37.8 | 62.5 | 2.80 |
| Ex. 5^{#} | 69 | 30 | | 1 | | | | | | A | 35.7 | - - | - - |
| Ex. 6^{#} | 65 | 30 | | 5 | | | | | | A | 35.8 | - | - |
| Ex. 7 | 64 | 30 | 5 | | | 1 | | | | A | 38.9 | 68.3 | 3.1 |
| Ex. 8 | 64 | 30 | 5 | | | | 1 | | | A | 38.0 | 67.9 | 3.10 3.02 |
| Ex. 9 | 64 | 30 | 5 | | | | | 1 | | A | 39.4 | 68.1 | 3.14 |
| Ex. 10 | 64 | 30 | 5 | | | | | | 1 | A | 39.6 | 69.8 | 3.20 |
| Ex. 11^{#} | 77 | 20 | 3 | | | | | | | A | 35.1 | 56.1 | 2.13 |
| Ex. 12^{#} | 87 | 10 | 3 | | | | | | | A | 32.9 | 49.7 | 1.70 |
| Comp. Ex. 1 | 70 | 30 | | | | | | | | B | 27.2 | 48.9 | 2.06 |
| Comp. Ex. 2 | 67 | 30 | | | 3 | | | | | A | 32.0 | - | - |
| Comp. Ex. 3 | 65 | 30 | | | 5 | | | | | A | 34.8 | 60.3 | 2.62 |
| Comp. Ex. 4 | 80 | 20 | | | | | | | | B | 28.6 | 48.2 | 1.79 |
| Comp. Ex. 5 | 90 | 10 | | | | | | | | B | 29.0 | 50.1 | 1.92 |

| | | | | | | | | | | | | | |
|---|---|---|---|---|---|---|---|---|---|---|---|---|---|
| * In the table, the unit of the numerical value of each component is mass%. ^{#} denotes Reference Examples. | | | | | | | | | | | | | |

## Claims

1. A resin composition comprising the following (1) to (3):
(1) a polyolefin;
(2) an epoxy-modified polyolefin;
(3) cellulose fiber; and
(4) a basic compound,
wherein the epoxy-modified polyolefin (2) has a melt viscosity at 230°C of 200 to 7,000 mPa·s, and
wherein the basic compound is at least one member selected from the group consisting of high-boiling tertiary amines, quaternary amine salts, polyallylamines and tertiary amine-modified polyolefins.

2. The resin composition according to claim 1, wherein the epoxy-modified polyolefin (2) is at least one member selected from the group consisting of glycidyl methacrylate-modified ethylene-propylene copolymers and glycidyl methacrylate-modified polypropylenes.

3. The resin composition according to claim 1 or 2, wherein the polyolefin (1) is at least one member selected from the group consisting of polypropylenes and propylene-α-olefin copolymers.

4. The resin composition according to any one of claims 1 to 3, wherein the epoxy-modified polyolefin (2) is contained in an amount of 1 to 5 mass% based on the total mass of the resin composition.

## Patentansprüche

1. Harzzusammensetzung, umfassend die nachstehenden (1) bis (3):
(1) ein Polyolefin;
(2) ein epoxymodifiziertes Polyolefin;
(3) Zellulosefaser; und
(4) eine basische Verbindung,
wobei das epoxymodifizierte Polyolefin (2) eine Schmelzviskosität bei 230°C von 200 bis 7.000 m·Pas aufweist, und
wobei die basische Verbindung mindestens ein Mitglied ist, ausgewählt aus der Gruppe, bestehend aus hochsiedenden tertiären Aminen, quartären Aminsalzen, Polyallylaminen und mit tertiären Amin modifizierten Polyolefinen.

2. Harzzusammensetzung nach Anspruch 1, wobei das epoxymodifizierte Polyolefin (2) mindestens ein Mitglied ist, ausgewählt aus der Gruppe, bestehend aus Glycidylmethacrylat-modifizierten Ethylen-Propylen-Copolymeren und Glycidylmethacrylat-modifizierten Polypropylenen.

3. Harzzusammensetzung nach Anspruch 1 oder 2, wobei das Polyolefin (1) mindestens ein Mitglied ist, ausgewählt aus der Gruppe, bestehend aus Polypropylenen und Propylen-α-Olefin-Copolymeren.

4. Harzzusammensetzung nach einem der Ansprüche 1 bis 3, wobei das epoxymodifizierte Polyolefin (2) in einer Menge von 1 bis 5 Massen%, basierend auf der Gesamtmasse der Harzzusammensetzung, enthalten ist.

## Revendications

1. Composition de résine comprenant les (1) à (3) suivants :
(1) une polyoléfine ;
(2) une polyoléfine modifiée par époxy ;
(3) une fibre cellulosique ; et
(4) un composé basique,
dans laquelle la polyoléfine modifiée par époxy (2) présente une viscosité à l'état fondu à 230 °C de 200 à 7000 mPa·s, et
dans laquelle le composé basique est au moins un élément sélectionné dans le groupe consistant en les amines tertiaires à point d'ébullition élevé, les sels d'amine quaternaire, les polyallylamines et les polyoléfines modifiées par amine tertiaire.

2. Composition de résine selon la revendication 1, dans laquelle la polyoléfine modifiée par époxy (2) est au moins un élément sélectionné dans le groupe consistant en les copolymères d'éthylène-propylène modifiés par le méthacrylate de glycidyle et les polypropylènes modifiés par le méthacrylate de glycidyle.

3. Composition de résine selon la revendication 1 ou 2, dans laquelle la polyoléfine (1) est au moins un élément sélectionné dans le groupe consistant en les polypropylènes et les copolymères de propylène-α-oléfine.

4. Composition de résine selon l'une quelconque des revendications 1 à 3, dans laquelle la polyoléfine modifiée par époxy (2) est contenue en une quantité de 1 à 5 % en masse sur la base de la masse totale de la composition de résine.
